# EUROPEAN PATENT SPECIFICATION

(11) **EP 4 524 020 B1**
(45) Date of publication and mention of the grant of the patent: **18.03.2026**
(21) Application number: 24196838.7
(22) Date of filing: 27.08.2024
(51) Int. Cl.: B63B 35/32, B63H 20/00, E02B 15/00

(54) **FINE DUST CAPTURING DEVICE**
FEINSTAUBABSCHEIDUNGSVORRICHTUNG
DISPOSITIF DE CAPTURE DE POUSSIÈRE FINE

(30) Priority: 13.09.2023 JP 2023148164
(43) Date of publication of application: 19.03.2025
(73) Proprietor: Suzuki Motor Corporation, Shizuoka 432-8611 (JP)
(72) Inventor: IWATA, Seiichiro, Shizuoka 432-8611 (JP)
(74) Representative: Haseltine Lake Kempner LLP

(56) References cited:
- US-A1- 2021 001 970
- US-A1- 2022 333 326

## Description

### TECHNICAL FIELD

The present invention relates to a fine dust capturing device that is provided in a ship propulsion device and captures fine dust contained in water such as sea, lakes, and rivers during navigation of a ship.

### BACKGROUND ART

In recent years, contamination due to fine dust such as microplastic has become a problem in sea, lakes, rivers and the like, and it is desired to recover the fine dust from the sea, lakes, rivers and the like to purify the sea, lakes, rivers and the like.

JP2021-169240A (Patent Literature 1) describes an outboard motor capable of collecting fine dust contained in water such as sea, lakes, and rivers. The outboard motor disclosed in the above publication is provided with a fine dust capturing device that captures fine dust. The fine dust capturing device includes a water intake, a capturer, and an outlet. When a ship is sailing, water such as the sea, lakes, and rivers flows into the capturer from the water intake, passes through a filter provided in the capturer, and is then discharged to the sea, lakes, rivers, and the like from the outlet. When the water passes through the filter, the fine dust contained in the water is captured by the filter.

Documents US2021001970A1 and US2022333326A1 also disclose outboard motors with provisions for collecting microplastics.

### CITATION LIST

### PATENT LITERATURE

Patent Literature 1: JP2021-169240A

In order to promote purification of sea, lakes, rivers, and the like, it is desired to increase an amount of fine dust captured per unit sailing time of a ship or an amount of fine dust captured per unit sailing distance, thereby increasing a capturing efficiency of fine dust.

In the fine dust capturing device of the related art described in JP2021-169240A, the water intake is disposed in a portion of a front portion of the outboard motor located in water, but the other portion substantially protrudes upward from a water surface, and an outlet is disposed at a position above the water surface and far away from the water surface. Therefore, it may be difficult for the water such as sea, the lakes, and the rivers to flow through the fine dust capturing device during the navigation of the ship, and it is difficult to increase a flow rate of water flowing through the fine dust capturing device, and thus it is difficult to increase a flow rate of water passing through the filter. As a result, it is difficult to increase an amount of fine dust captured per unit sailing time or an amount of the fine dust captured per unit sailing distance, and it is difficult to increase a capturing efficiency of the fine dust.

Therefore, the inventor of the present application has devised a method in which the entire fine dust capturing device is immersed in water by disposing the fine dust capturing device in a portion of the outboard motor located under a water surface, the fine dust capturing device is placed in a water stream flowing from a front side toward a rear side of the outboard motor during forward movement of a ship, and the water flows into the fine dust capturing device by efficiently using a pressure of the water by the water stream. According to the present invention, while the ship is moving forward, the flow rate of the water flowing through the fine dust capturing device can be increased, the flow rate of the water passing through the filter can be increased, and the capturing efficiency of the fine dust can be increased as compared with the fine dust capturing device in the related art.

However, the present invention has the following concern. That is, when the ship moves rearward or when the ship that is moving forward suddenly stops, water flows in a direction reverse to a direction during the forward movement of the ship. Therefore, the water flows back in the fine dust capturing device and passes through the filter in a reverse direction.

As a result, the fine dust accumulated in the filter may diffuse away from the filter and diffuse. When there are many rearward movements and sudden stops during the sailing of the ship, a frequency of the diffusion of the fine dust accumulated in the filter increases, and as a result, the capturing efficiency of the fine dust may not increase.

### SUMMARY

The present invention has been made in view of the above-described problems, and an object thereof is to provide a fine dust capturing device capable of preventing fine dust accumulated in a filter from diffusing away from a filter when a direction of water flowing around the fine dust capturing device is reverse to that during forward movement of the ship.

In order to solve the above problems, the present invention provides a fine dust capturing device that is provided in a ship propulsion device, is disposed in water, and captures fine dust contained in the water. The fine dust capturing device includes: a body portion extending in one direction; a water intake provided on one end side of the body portion; a wall portion configured to close another end side of the body portion; a first passage and a second passage extending in parallel to each other in the one direction inside the body portion; a water discharge chamber provided between the wall portion and another end portion of each of the first passage and the second passage inside the body portion; an outlet provided in the wall portion and communicating with the water discharge chamber; and a filter provided in the middle of the first passage and configured to capture the fine dust, in which one end side of each of the first passage and the second passage is connected to the water intake, another end side of each of the first passage and the second passage opens in the water discharge chamber, and the outlet is disposed in the wall portion at a position that does not face an opening of the first passage opening in the water discharge chamber, but faces an opening of the second passage opening in the water discharge chamber.

According to the present invention, it is possible to prevent the fine dust accumulated in the filter from diffusing away from the filter when a direction of the water flowing around the fine dust capturing device is a direction reverse to that during forward movement of the ship.

### BRIEF DESCRIPTION OF DRAWINGS

FIG. 1 is a perspective view showing an outboard motor provided with a fine dust capturing device according to a first embodiment of the present invention.
FIG. 2 is a view illustrating a state in which a lower portion of the outboard motor of FIG. 1 is viewed from left.
FIG. 3A is a view illustrating a state in which the lower portion of the outboard motor of FIG. 1 is viewed from front, and FIG. 3B is a view illustrating a state in which the lower portion of the outboard motor of FIG. 1 is viewed from rear.
FIG. 4A is a front view of the fine dust capturing device according to the first embodiment of the present invention, FIG. 4B is a back view of the fine dust capturing device, FIG. 4C is a left side view of the fine dust capturing device, and FIG. 4D is a plan view of the fine dust capturing device.
FIG. 5 is a cross-sectional view showing a state in which the fine dust capturing device taken along a cutting line V-V in FIG. 4A is viewed from the left.
FIG. 6 is a cross-sectional view showing a state in which the fine dust capturing device taken along a cutting line VI-VI of FIG. 5 is viewed from front.
FIGS. 7A and 7B are views illustrating a flow of water in the fine dust capturing device according to the first embodiment of the present invention.
FIG. 8 is a front view of a fine dust capturing device according to a second embodiment of the present invention.
FIGS. 9A and 9B are views illustrating a flow of water in the fine dust capturing device according to the second embodiment of the present invention.

### DESCRIPTION OF EMBODIMENTS

A fine dust capturing device of the present embodiment is a device that captures fine dust contained in water, and is provided in a ship propulsion device and disposed in water. The fine dust capturing device of the present embodiment includes: a body portion extending in one direction; a water intake provided on one end side of the body portion; a wall portion closing the other end side of the body portion; a first passage and a second passage extending in parallel to each other in the one direction inside the body portion; a water discharge chamber provided between the wall portion and the other end portion of each of the first passage and the second passage inside the body portion; an outlet provided in the wall portion and communicating with the water discharge chamber; and a filter provided in the middle of the first passage and capturing the fine dust.

In the fine dust capturing device of the present embodiment, the one end side of each of the first passage and the second passage is connected to the water intake. The other end side of each of the first passage and the second passage opens into the water discharge chamber. Further, the outlet is disposed in the wall portion at a position that does not face the opening of the first passage that opens in the water discharge chamber, but faces the opening of the second passage that opens in the water discharge chamber.

In the fine dust capturing device of the present embodiment, a flow direction of water when the water flows from the one end side toward the other end side of the body portion is a forward direction, and a flow direction of water when the water flows from the other end side toward the one end side of the body portion is a reverse direction. For embodiment, the fine dust capturing device of the present embodiment is disposed at a portion of the ship propulsion device that sinks in water such that the one end side of the body portion faces a front side of the ship propulsion device and the other end side of the body portion faces a rear side of the ship propulsion device. In this case, when the water flows from the front side toward the rear side of the ship propulsion device during the forward movement of the ship, a direction of water flowing around the fine dust capturing device is the forward direction. Further, when the water flows from the rear side toward the front side of the ship propulsion device, for example, during rearward movement of the ship or at the time of sudden stop of the ship that is moving forward, a direction of the water flowing around the fine dust capturing device is the reverse direction.

In the fine dust capturing device of the present embodiment, when the water flows around the fine dust capturing device in the forward direction, the water flows into the first passage and the second passage from the water intake. The water flowing into the first passage from the water intake flows through the first passage toward the other end side of the body portion and flows into the water discharge chamber. Further, the water flowing into the second passage from the water intake flows through the second passage toward the other end side of the body portion and flows into the water discharge chamber. The water flowing into the water discharge chamber flows out of the body portion from the outlet. The water flowing through the first passage from the water intake toward the water discharge chamber passes through the filter provided in the middle of the first passage in the forward direction. When the water passes through the filter in the forward direction, the fine dust contained in the water is captured by the filter.

Further, in the fine dust capturing device of the present embodiment, when the water flows in the reverse direction around the fine dust capturing device, the water flows into the water discharge chamber from the outlet. The water flowing into the water discharge chamber from the outlet flows into the first passage and the second passage. At this time, the outlet is disposed at a position that does not face the opening of the first passage that opens in the water discharge chamber, but faces the opening of the second passage that opens to the water discharge chamber. Thus, while a path of the flow of the water flowing into the water discharge chamber from the outlet and flowing into the second passage is linear, a path of the flow of the water flowing into the water discharge chamber from the outlet and flowing into the first passage is bent. Accordingly, the water flowing into the water discharge chamber from the outlet flows into the second passage more easily than into the first passage. Therefore, a flow rate of the water flowing into the second passage after flowing into the water discharge chamber from the outlet is larger than a flow rate of the water flowing into the first passage after flowing into the water discharge chamber from the outlet. As a result, a flow rate of water flowing through the second passage from the water discharge chamber toward the water intake is larger than a flow rate of water flowing through the first passage from the water discharge chamber toward the water intake. Accordingly, a flow rate of the water passing through the filter provided in the middle of the first passage in the reverse direction can be reduced, and the fine dust accumulated in the filter can be prevented from diffusing away from the filter.

### Embodiment 1

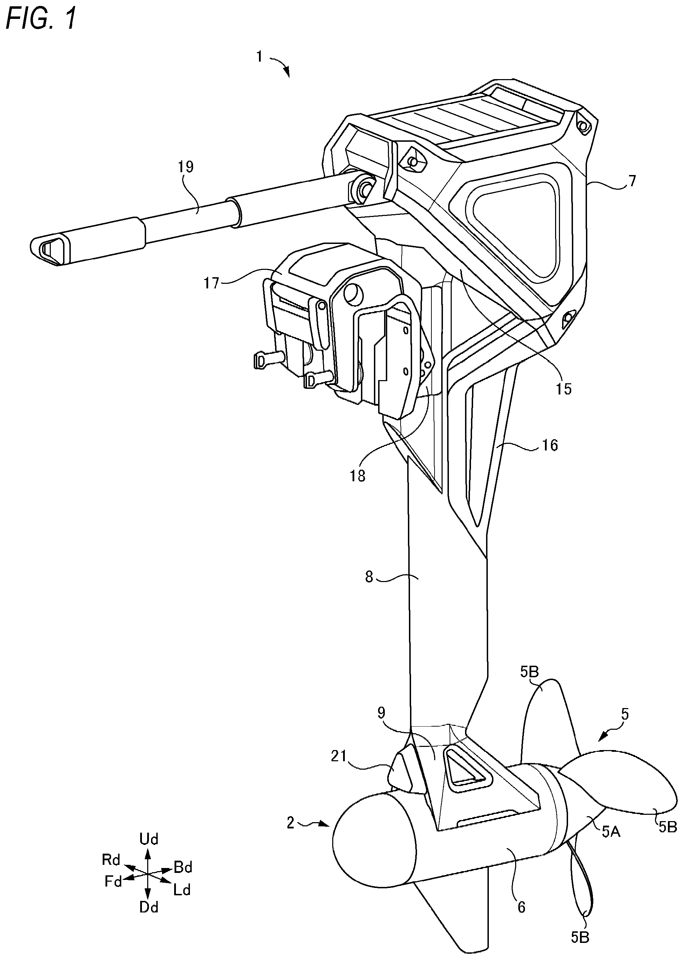

A fine dust capturing device according to a first embodiment of the present invention will be described with reference to FIGS. 1 to 7B. In the present embodiment, an outboard motor is taken as an example of a ship propulsion device provided with the fine dust capturing device. In the first embodiment, when describing directions of upper (Ud), lower (Dd), front (Fd), rear (Bd), left (Ld), and right (Rd), arrows drawn at the lower left or the lower right of each figure are followed.

### Outboard Motor

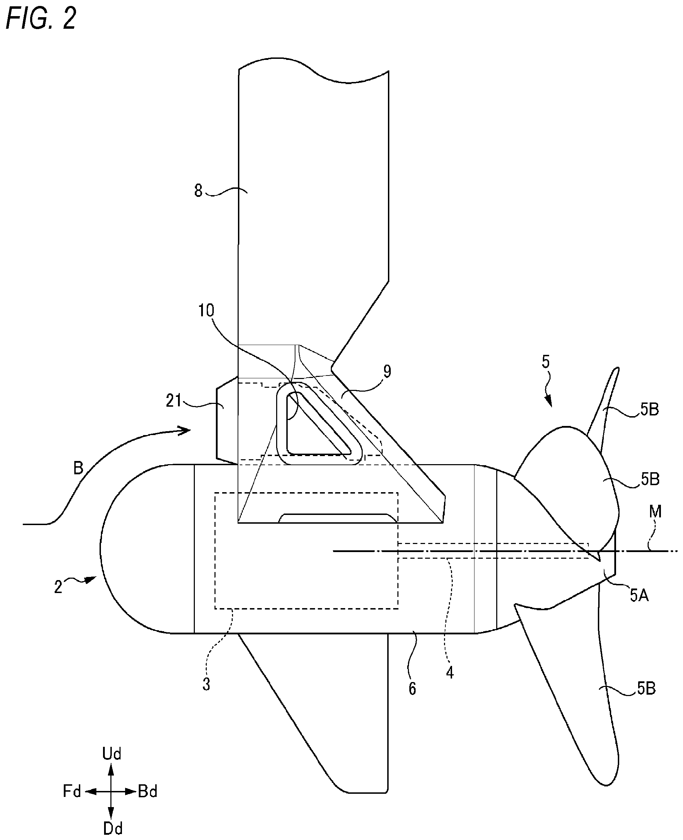

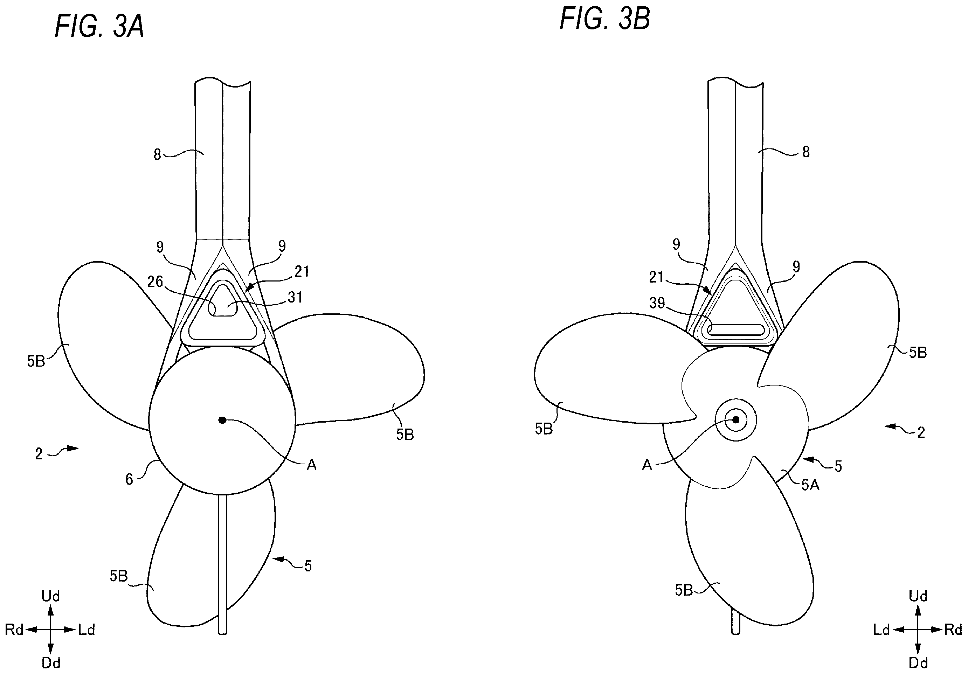

FIG. 1 shows a state in which an outboard motor 1 provided with a fine dust capturing device 21 according to the first embodiment of the present invention is viewed from front upper left. FIG. 2 shows a state in which a lower portion of the outboard motor 1 is viewed from left. FIG. 3A shows a state in which the lower portion of the outboard motor 1 is viewed from front. FIG. 3B shows a state in which the lower portion of the outboard motor 1 is viewed from rear.

The outboard motor 1 is a device that is attached to a transom of a ship to propel the ship. As shown in FIG. 1, the outboard motor 1 includes a propeller unit 2, a battery case 7, a support portion 8, a transom bracket 17, a swivel bracket 18, a bar handle 19, and a fine dust capturing device 21.

The propeller unit 2 is disposed in the lower portion of the outboard motor 1, and is located below a water surface in a state in which the outboard motor 1 is attached to the ship. As shown in FIG. 2, the propeller unit 2 includes a motor 3, a propeller shaft 4, a propeller 5, and a propeller unit case 6. The motor 3 is disposed at a front portion in the propeller unit case 6. The propeller shaft 4 extends in a front-rear direction, and a front portion of the propeller shaft 4 is rotatably supported by a rear portion in the propeller unit case 6. The propeller shaft 4 is connected to an output shaft of the motor 3 or integrally formed with the output shaft of the motor 3, and rotates by power of the motor 3. The propeller 5 is fixed to a rear end portion of the propeller shaft 4 and rotates integrally with the propeller shaft 4. The propeller 5 includes a hub 5A and a plurality of blades 5B. The propeller unit case 6 is a sealed case having a cylindrical outer shape.

As shown in FIG. 1, the battery case 7 is disposed at an upper portion of the outboard motor 1, and is located above the water surface in a state in which the outboard motor 1 is attached to the ship. A battery that supplies electric power for driving the motor 3 to the motor 3 is accommodated in the battery case 7.

The support portion 8 is a member that connects the battery case 7 to the propeller unit 2 and supports both. The propeller unit 2 is supported by a lower end portion of the support portion 8, and the battery case 7 is supported by an upper portion of the support portion 8. Specifically, the support portion 8 is formed in a columnar shape extending in an upper-lower direction, and the propeller unit case 6 is fixed to the lower end portion of the support portion 8. An attachment plate portion 15 is fixed to an upper end portion of the support portion 8, and the battery case 7 is detachably attached to the attachment plate portion 15. Further, an outboard motor carrying handle 16 for a user to carry the outboard motor 1 detached from the ship is provided at a rear portion of the support portion 8.

The transom bracket 17 is a clamp mechanism for attaching the outboard motor 1 to the transom of the ship. The transom bracket 17 is disposed at a front portion of the upper portion of the support portion 8.

The swivel bracket 18 is a bracket for making the outboard motor 1 attached to the transom rotatable in the left-right direction with respect to the ship, and is integrally formed with a rear portion of the transom bracket 17. A steering shaft (not shown) is rotatably attached to the swivel bracket 18, and the steering shaft is fixed to the front portion of the upper portion of the support portion 8. The support portion 8 can rotate with respect to the swivel bracket 18 with an axis of the steering shaft as a rotation axis, and as a result, the outboard motor 1 is rotatable in the left-right direction with respect to the ship.

The bar handle 19 is a handle that rotates the outboard motor 1 in the left-right direction with respect to the ship in order to steer the ship. The bar handle 19 is disposed above and in front of the support portion 8. Specifically, the bar handle 19 is attached to an end portion on an upper front side of the attachment plate portion 15. The user can rotate the outboard motor 1 to the right or left with respect to the ship by grasping a distal end portion of the bar handle 19 and moving the bar handle 19 to the left or right, and can change a direction of the propeller 5 to the right or left.

### Configuration of Fine Dust Capturing Device

The fine dust capturing device 21 is provided between the lower end portion of the support portion 8 and the propeller unit case 6 in the outboard motor 1. In a state in which the outboard motor 1 is attached to the ship, the entire fine dust capturing device 21 is located in water. The fine dust capturing device 21 is a device that captures fine dust diffusing in a water area such as sea, lakes, or rivers where the ship sails.

The fine dust is, for example, fine dust having an outer diameter or a maximum length of 0.1 mm or more and 5 mm or less. Plastic dust flows into the sea, lakes, rivers, and the like, and is crushed by waves or a water flow, or is decomposed by ultraviolet light or the like into minute plastic pieces. The minute plastic pieces may diffuse in water such as sea, lakes, and rivers. Such a minute plastic piece is generally called microplastic. The microplastic corresponds to the fine dust.

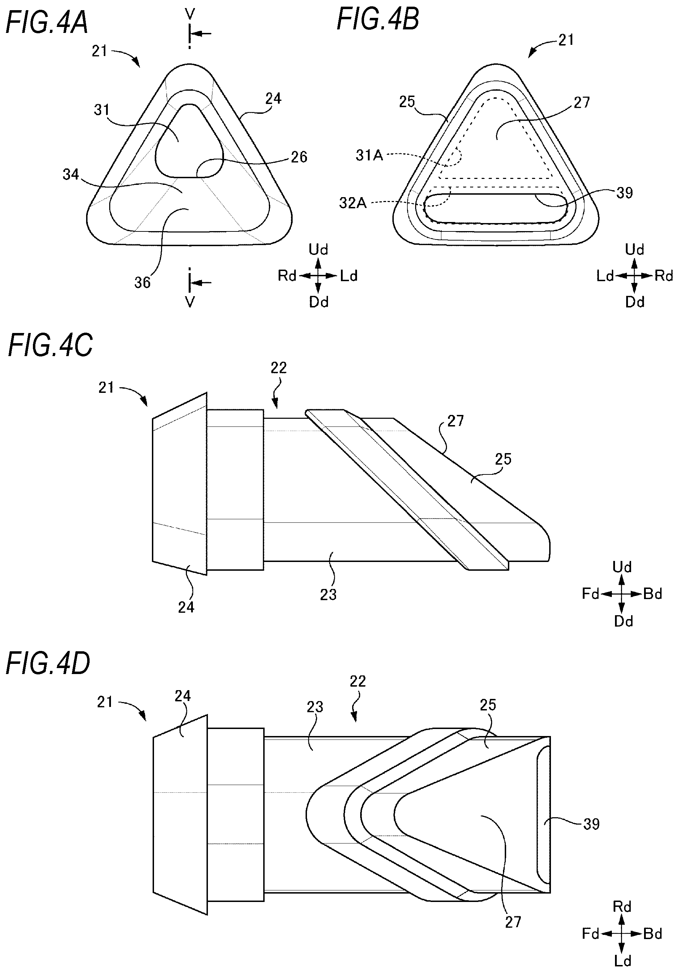

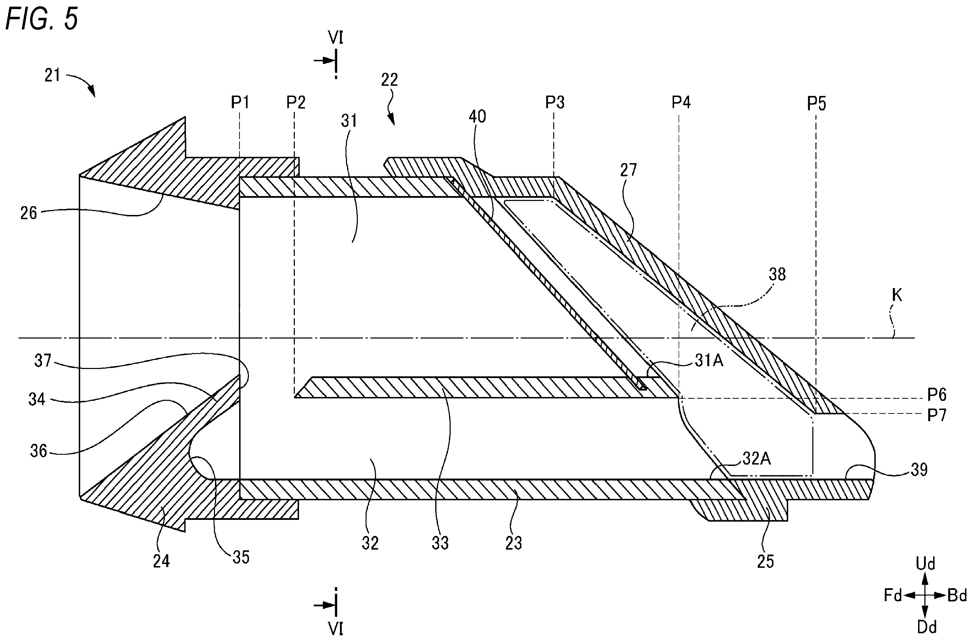

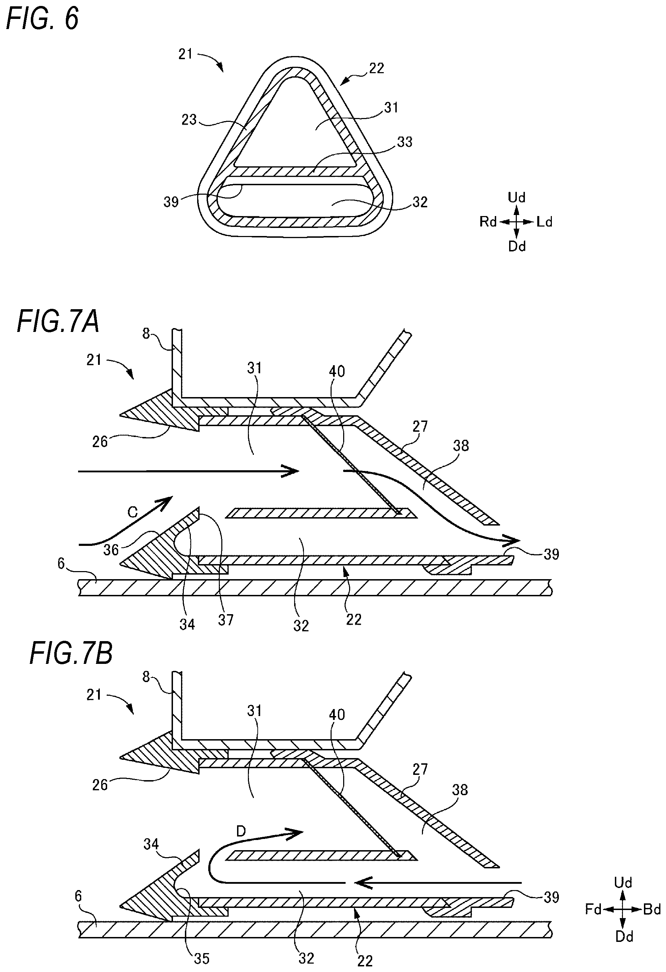

FIGS. 4A to 4D show the fine dust capturing device 21. Specifically, FIG. 4A is a front view of the fine dust capturing device 21, FIG. 4B is a back view of the fine dust capturing device 21, FIG. 4C is a left side view of the fine dust capturing device 21, and FIG. 4D is a plan view of the fine dust capturing device 21. FIG. 5 shows the fine dust capturing device 21 cut along a cutting line V-V in FIG. 4A as viewed from left (right in FIG. 4A). FIG. 6 shows the fine dust capturing device 21 cut along a cutting line VI-VI of FIG. 5 as viewed from front (left in FIG. 5).

As shown in FIGS. 4A to 6, the fine dust capturing device 21 includes a body portion 22 extending in the front-rear direction, a water intake 26 provided on a front end side of the body portion 22, a rear wall portion 27 provided on a rear end side of the body portion 22, a first passage 31 and a second passage 32 provided inside the body portion 22, a water discharge chamber 38 (a region surrounded by a two-dot chain line in FIG. 5) provided behind the first passage 31 and the second passage 32 inside the body portion 22, an outlet 39 provided in the rear wall portion 27, and a filter 40 provided in the middle of the first passage 31.

The body portion 22 is formed of, for embodiment, a resin or metal. The body portion 22 is formed in a tubular shape extending linearly in the front-rear direction as a whole. K in FIG. 5 is an axis of the body portion 22. In the present embodiment, as shown in FIG. 6, the body portion 22 is formed in the tubular shape having a substantially triangular cross-sectional shape. As shown in FIG. 5, the body portion 22 includes a passage forming portion 23, a water intake forming portion 24, and a water discharge chamber forming portion 25. The passage forming portion 23 is formed in a triangular tubular shape extending linearly in the front-rear direction. The water intake forming portion 24 is attached and fixed to a portion on a front end side of the passage forming portion 23 so as to cover the front end side of the passage forming portion 23. The water discharge chamber forming portion 25 is formed in a bottomed triangular tubular shape, and is attached and fixed to a portion on a rear end side of the passage forming portion 23.

The water intake 26 is a port through which water around the outboard motor 1 is taken into the body portion 22. As shown in FIG. 4A, the water intake 26 is formed in the water intake forming portion 24. The water intake 26 is a hole penetrating the water intake forming portion 24. Further, the water intake 26 is disposed in an upper portion of the water intake forming portion 24 so as to face an opening in a front end side of the first passage 31 provided in an upper portion of the passage forming portion 23. Specifically, the water intake 26 is disposed such that a center thereof is located above a center of the water intake forming portion 24, and the center of the water intake 26 is located above the axis K of the body portion 22. In the present embodiment, the water intake 26 has a substantially triangular shape obtained by reducing the substantially triangular cross-sectional shape of the body portion 22.

The rear wall portion 27 is a wall that closes the rear end side of the body portion 22. As shown in FIGS. 4B and 4D, a bottom plate of the water discharge chamber forming portion 25 corresponds to the rear wall portion 27. The rear wall portion 27 is formed in a flat plate shape. Further, P3 in FIG. 5 indicates a position in the front-rear direction of an upper end of an inner surface of the rear wall portion 27, and P5 in FIG. 5 indicates a position in the front-rear direction of a lower end of the inner surface of the rear wall portion 27. As can be seen from the positions P3 and P5, the rear wall portion 27 is inclined such that the lower end thereof is located rearward of the upper end thereof. The inner surface of the rear wall portion 27 facing the water discharge chamber 38 is inclined such that the lower end portion thereof is located rearward of the upper end thereof.

The first passage 31 is a passage through which water taken in from the water intake 26 flows, and fine dust contained in the water is captured by the filter 40. As shown in FIG. 5, the first passage 31 extends in the front-rear direction in the upper portion of the passage forming portion 23. The first passage 31 extends linearly from a front end to a rear end of the passage forming portion 23. The front end side of the first passage 31 is connected to the water intake 26. A rear end side of the first passage 31 is connected to the water discharge chamber 38. An opening 31A on the rear end side of the first passage 31 opens in an upper portion of the water discharge chamber 38.

The second passage 32 is a passage for allowing water (backflow water) flowing into the water discharge chamber 38 from the outlet 39 to flow therethrough, and preventing the water flowing into the water discharge chamber 38 from the outlet 39 from flowing back through the first passage 31 and passing through the filter 40 in a reverse direction. The second passage 32 extends in the front-rear direction in the lower portion of the passage forming portion 23. The second passage 32 extends linearly from the front end to the rear end of the passage forming portion 23. The second passage 32 is provided in parallel with the first passage 31. The second passage 32 extends parallel to the first passage 31 and extends in the same direction as the first passage 31. A rear end side of the second passage 32 is connected to the water discharge chamber 38. An opening 32A on the rear end side of the second passage 32 opens in the lower portion of the water discharge chamber 38.

The passage forming portion 23 is provided with a partition portion 33 that partitions a space in the passage forming portion 23 into an upper portion and a lower portion. The first passage 31 and the second passage 32 are formed by partitioning the space in the passage forming portion 23 by the partition portion 33. The partition portion 33 is formed in a flat plate shape. P1 in FIG. 5 indicates a position in the front-rear direction of the front end of the passage forming portion 23, that is, a front end of each of the first passage 31 and the second passage 32, and P2 in FIG. 5 indicates a position in the front-rear direction of a front end of the partition portion 33. As can be seen from the positions P1 and P2, the front end of the partition portion 33 is located rearward of the front end of each of the first passage 31 and the second passage 32. A rear end of the partition portion 33 faces the inside of the water discharge chamber 38. Further, P3 in FIG. 5 indicates a position in the front-rear direction of an upper end of the inner surface of the rear wall portion 27, and P4 in FIG. 5 indicates a position in the front-rear direction of the rear end of the partition portion 33. As can be seen from the positions P3 and P4, the rear end of the partition portion 33 is located rearward of the upper end of the inner surface of the rear wall portion 27.

Further, a protruding wall portion 34 is provided at a lower portion of a front end portion of the water intake forming portion 24. The protruding wall portion 34 protrudes upward from the lower portion of the front end portion of the water intake forming portion 24 so as not to block a front side of the first passage 31 but to block a front side of the second passage 32. As shown in FIG. 4A, in the water intake forming portion 24, a lower side of a portion where the water intake 26 is formed is the protruding wall portion 34.

As shown in FIG. 5, a backflow control surface 35 is formed on a rear surface of the protruding wall portion 34. The backflow control surface 35 has a function of controlling a flow direction of the water flowing into the water discharge chamber 38 from the outlet 39 such that the water flows into the first passage 31 after flowing through the second passage 32 from the rear end side toward the front end side thereof. When the fine dust capturing device 21 is viewed from the left, the backflow control surface 35 is curved so as to protrude forward, and an upper end side portion of the backflow control surface 35 extends upward and rearward

A gap 37 is formed between an upper end of the backflow control surface 35 and the front end of the partition portion 33. The gap 37 serves as a passage through which the backflow water that flows into the water discharge chamber 38 from the outlet 39 and flows through the second passage 32 from the rear end side to the front end side thereof flows into the first passage 31. In the present embodiment, the second passage 32 is connected to the water intake 26 via the gap 37 and a front end portion of the first passage 31.

An inflow control surface 36 is formed on a front surface of the protruding wall portion 34. The inflow control surface 36 has a function of controlling the flow direction of the water such that the water flowing from the front side toward the fine dust capturing device 21 flows into the first passage 31 and advances rearward through the first passage 31. When the fine dust capturing device 21 is viewed from the left, the inflow control surface 36 is inclined such that an upper end thereof is located rearward of a lower end portion thereof.

The water discharge chamber 38 is a chamber for controlling a water flow such that when water is taken in from the water intake 26 and flows through the first passage 31, the water flows out from the outlet 39, and on the other hand, when the water flows into the body portion 22 from the outlet 39, the water flows into the second passage 32. The water discharge chamber 38 is provided between the rear end of each of the first passage 31 and the second passage 32 and the rear wall portion 27 inside the body portion 22. Specifically, the inside of the water discharge chamber forming portion 25 is the water discharge chamber 38. The rear end side of the first passage 31 opens in the upper portion of the water discharge chamber 38, and the rear end side of the second passage 32 opens in a lower portion of the water discharge chamber 38.

The outlet 39 is a port for discharging the water taken in from the water intake 26, flowing through the first passage 31, and flowing into the water discharge chamber 38 to the periphery of the outboard motor 1. As shown in FIG. 4B, the outlet 39 is formed in a lower portion of the rear wall portion 27 (bottom plate of the water discharge chamber forming portion 25). The outlet 39 is a hole penetrating the rear wall portion 27. The outlet 39 communicates with the inside of the water discharge chamber 38. A center of the outlet 39 is located below a center of the water discharge chamber forming portion 25, and a center of the outlet 29 is located below the axis K of the body portion 22. Further, in the present embodiment, the outlet 29 has a rectangular shape in which each corner portion is chamfered, and extends in a direction parallel to a bottom side of the substantially triangular cross section of the main body portion 22.

The outlet 39 is disposed in the rear wall portion 27 at a position that does not face the opening 31A on the rear end side of the first passage 31 that opens in the water discharge chamber 38, but faces the opening 32A on the rear end side of the second passage 32 that opens in the water discharge chamber 38. As shown in FIG. 4B, when the fine dust capturing device 21 is viewed from the rear, the outlet 39 overlaps the opening 32A on the rear end side of the second passage 32, but does not overlap the opening 31A on the rear end side of the first passage 31 at all. When the fine dust capturing device 21 is viewed from the rear, the opening 31A on the rear end side of the first passage 31 overlaps a portion of the rear wall portion 27 where the outlet 39 is not formed.

Further, a position P6 in FIG. 5 indicates a position in the upper-lower direction of an upper end of the opening 32A on the rear end side of the second passage 32 opening in the water discharge chamber 38. Further, P7 in FIG. 5 indicates a position in the upper-lower direction of an upper end of the outlet 39. As can be seen from the positions P6 and P7, the upper end of the outlet 39 is located below the upper end of the opening 32A on the rear end side of the second passage 32 that opens in the water discharge chamber 38.

The filter 40 captures fine dust contained in water by allowing the water flowing through the first passage 31 to pass therethrough. The filter 40 is disposed at the rear portion of the first passage 31 in the body portion 22. The filter 40 is provided so as to block the entire cross section of the first passage 31. The filter 40 is formed of, for embodiment, a non-woven fabric in a sheet shape or a plate shape. The water can pass through the filter 40, but the fine dust cannot pass through the filter 40. The outer diameter or the maximum length of the fine dust is, for embodiment, 5 mm or less, and the filter 40 capable of capturing the fine dust is, for embodiment, a filter for removing algae in water such as sea, lakes, rivers, a cap of a pet bottle, or pebbles and the like wound up from the bottom of water, or a filter having a significantly fine mesh size as compared with a strainer.

In the present embodiment, the filter 40 has a multi-layer structure. For embodiment, the filter 40 includes a first layer having coarse meshes and a second layer having fine meshes. The filter 40 is disposed in the first passage 31 such that the first layer is located on a water intake port side and the second layer is located on an outlet side. According to the structure and arrangement of the filter 40, when the water flows back through the first passage 31, flows from the rear end side to the front end side of the first passage 31, and passes through the filter 40 in the reverse direction, the fine dust captured by the filter 40 can be prevented from diffusing away from the filter 40. That is, when the water flows through the first passage 31 in a forward direction from the front end side toward the rear end side thereof and passes through the filter 40 in the forward direction, the fine dust contained in the water is captured by the first layer or the second layer, but when the flow of water in the forward direction continues, the fine dust is accumulated in an intermediate portion between the first layer and the second layer, or inside the second layer. On the other hand, when the water flows through the first passage 31 in the reverse direction from the rear end side toward the front end side thereof and passes through the filter 40 in the reverse direction, the fine dust accumulated inside the second layer or in the intermediate portion between the first layer and the second layer is pushed toward the front end side of the first passage 31 by the water. However, at this time, since the fine dust cannot easily pass through the first layer, most of the fine dust remains inside the second layer or in the intermediate portion between the first layer and the second layer. Accordingly, the fine dust captured by the filter 40 is prevented from diffusing away from the filter 40 by the backflow of water. The fine dust capturing device 21 includes the second passage 32 for preventing the water flowing into the water discharge chamber 38 from the outlet 39 from flowing back through the first passage 31 and passing through the filter 40 in the reverse direction. Thus, although a flow rate of the water passing through the filter 40 in the reverse direction can be reduced, the flow rate of the water passing through the filter 40 in the reverse direction cannot be made zero. Even when the water flows through the filter 40 in the reverse direction, the multi-layer structure of the filter 40 can prevent the fine dust accumulated in the filter 40 from diffusing away from the filter 40.

A material of the filter 40 is not limited to the non-woven fabric, and may be a woven fabric, sponge, a glass mat, or the like. The filter 40 may be single-layered.

### Arrangement of Fine Dust Capturing Device

As shown in FIG. 1, the fine dust capturing device 21 is provided at the lower end portion of the support portion 8, specifically, between the lower end portion of the support portion 8 and the propeller unit case 6. In the present embodiment, the lower end portion of the support portion 8 has a bifurcated structure branched in the left-right direction. Specifically, as shown in FIG. 3A, the lower end portion of the support portion 8 is provided with two coupling portions 9 that are respectively coupled to an upper left portion and an upper right portion of the propeller unit case 6. One coupling portion 9 extends downward from a left portion of the lower end portion of the support portion 8 while inclining leftward, and a lower end portion thereof is coupled to an upper left portion of a substantially intermediate portion of the propeller unit case 6 in the front-rear direction. The other coupling portion 9 extends downward from a right portion of the lower end portion of the support portion 8 while inclining rightward, and a lower end portion thereof is coupled to an upper right portion of the substantially intermediate portion of the propeller unit case 6 in the front-rear direction. With this structure, a space having a triangular shape in a front view is formed between the lower end portion of the support portion 8 and an upper surface of the propeller unit case 6. The fine dust capturing device 21 is disposed in this space.

In the fine dust capturing device 21, the body portion 22 is formed in the triangular tubular shape as described above, but a shape of the body portion 22 corresponds to a shape of the space between the lower end portion of the support portion 8 and the upper surface of the propeller unit case 6. Therefore, the fine dust capturing device 21 is provided so as to be fitted in the space formed between the lower end portion of the support portion 8 and the upper surface of the propeller unit case 6. In a state in which the fine dust capturing device 21 is provided in the space between the lower end portion of the support portion 8 and the upper surface of the propeller unit case 6, an outer peripheral surface of the fine dust capturing device 21 (specifically, an outer peripheral surface of the water intake forming portion 24 and the like) is in contact with an inner surface of each coupling portion 9 and the upper surface of the propeller unit case 6.

The main body portion 22 of the fine dust capturing device 21 is disposed in the space between the lower end portion of the support portion 8 and the upper surface of the propeller unit case 6 such that a front end side thereof faces a front side of the outboard motor 1 and a rear end side thereof faces a rear side of the outboard motor 1. Accordingly, the water intake 26 faces the front side of the outboard motor 1, an extension direction of the first passage 31 and the second passage 32 is the front-rear direction of the outboard motor 1, and the outlet 39 faces the rear side of the outboard motor 1.

As shown in FIG. 3A, when the outboard motor 1 is viewed from the front, the water intake 26 is disposed above the propeller unit case 6 and above a rotation center A of the propeller 5 in a vertical direction. The water intake 26 faces the front side of the outboard motor 1 and in a direction parallel to an axis M (see FIG. 2) of the propeller shaft 4. The water intake 26 faces water around the outboard motor 1, that is, there is no other passage such as a pipe or a tube connected to the water intake 26 on the front side of the water intake 26.

As shown in FIG. 3B, when the outboard motor 1 is viewed from the rear side, the outlet 39 is disposed above the propeller unit case 6 and above the rotation center A of the propeller 5 in the vertical direction. The outlet 39 is located in front of the propeller 5. The water outlet 39 faces the rear side of the outboard motor 1 and in the direction parallel to the axis M of the propeller shaft 4. Further, the outlet 39 faces water around the outboard motor 1, that is, there is no other passage such as a pipe or a tube connected to the outlet 39 on a rear side of the outlet 39.

In the present embodiment, the passage forming portion 23 is formed of a transparent resin. As shown in FIG. 2, each of the coupling portions 9 is provided with a window 10. The window 10 is formed by a hole penetrating the coupling portion 9. The transparent passage forming portion 23 is disposed at a position corresponding to the window 10. Accordingly, the user can confirm the amount of fine dust accumulated in the filter 40 by looking through the window 10 when the outboard motor 1 is pulled up to the ground, for example.

In the present embodiment, the fine dust capturing device 21 can be removed from the space formed between the lower end portion of the support portion 8 and the upper surface of the propeller unit case 6. Further, in the body portion 22 of the fine dust capturing device 21, the water discharge chamber forming portion 25 is detachably attached to a rear portion of the passage forming portion 23. The filter 40 is detachably attached to the rear portion of the passage forming portion 23 in the body portion 22. When the user pulls up the outboard motor 1 to the ground and looks through the window 10 to confirm that a large amount of fine dust is accumulated in the filter 40, the user can remove the fine dust capturing device 21 from the outboard motor 1 and replace the filter 40.

### Control of Water Flow

In the fine dust capturing device 21, the flow direction of the water when the water flows from the front end side to the rear end side of the body portion 22 is the forward direction, and the flow direction of the water when the water flows from the rear end side to the front end side of the body portion 22 is the reverse direction. The fine dust capturing device 21 is provided in the outboard motor such that the front end side of the body portion 22 faces the front side of the outboard motor 1 and the rear end side of the body portion 22 faces the rear of the outboard motor 1. Accordingly, when the water flows from the front side toward the rear side of the outboard motor 1 during forward movement of the ship, a direction of water flowing around the fine dust capturing device 21 is the forward direction. Further, when the water flows from the rear side toward the front side of the outboard motor 1, for example, during rearward movement of the ship or at the time of sudden stop of the ship that is moving forward, the direction of the water flowing around the fine dust capturing device 21 is the reverse direction.

FIG. 7A is an end view of the fine dust capturing device 21 shown in FIG. 5, and shows a flow of water in the body portion 22 when the direction of the water flowing around the fine dust capturing device 21 is the forward direction. In FIG. 7A, when water flows in the forward direction around the fine dust capturing device 21, the water flows into the first passage 31 from the water intake 26. At this time, not only the water flowing linearly from a front side of the body portion 22 toward a front end portion of the body portion 22, but also the water flowing linearly from the front side of the propeller unit case 6 toward the front end portion of the propeller unit case 6 and then flowing toward the front end portion of the body portion 22 while turning upward and rearward along a curved surface of a front end portion of the propeller unit case 6 flows into the water intake 26 (see an arrow B in FIG. 2).

The water flowing into the first passage 31 from the water intake 26 is divided into water flowing through the first passage 31 toward the rear end side thereof and water flowing into the second passage 32 from the front end portion of the first passage 31 through the gap 37. However, the front side of the second passage 32 is blocked by the protruding wall portion 34. Further, the gap 37 communicates between the front end portion of the first passage 31 and a front end portion of the second passage 32 in the upper-lower direction, and the communication direction is largely different from the flow direction of water flowing into the first passage 31 from the water intake 26. The inflow control surface 36 is formed on the front surface of the protruding wall portion 34, and the inflow control surface 36 is inclined such that the upper end thereof is located rearward of the lower end portion thereof. Therefore, the water that hits the inflow control surface 36 from the front side of the body portion 22 is controlled by the inflow control surface 36 and flows upward and rearward along the inflow control surface 36 (see an arrow C in FIG. 7A). Then, the water flows into the first passage 31 and advances rearward through the first passage 31. Accordingly, a flow rate of the water flowing into the first passage 31 from the water intake 26 and flowing through the first passage 31 toward the rear end side thereof is significantly larger than a flow rate of the water flowing into the first passage 31 from the water intake 26 and flowing into the second passage 32 from the front end portion of the first passage 31 through the gap 37.

The water flowing through the first passage 31 toward the rear end side thereof passes through the filter 40 in the forward direction. When the water passes through the filter 40 in the forward direction, the fine dust contained in the water is captured by the filter 40.

The water that has passed through the filter 40 in the forward direction in the first passage 31 flows into the water discharge chamber 38 and then flows out of the body portion 22 from the outlet 39. At this time, since the inner surface of the rear wall portion 27 is inclined such that a lower end portion thereof is located rearward of an upper end thereof, the water flowing into the upper portion of the water discharge chamber 38 from the first passage 31 is controlled by the inclined inner surface of the rear wall portion 27, flows downward and rearward along the inner surface of the rear wall portion 27, and smoothly flows toward the outlet 39 provided in the lower portion of the rear wall portion 27.

FIG. 7B is an end view of the fine dust capturing device 21 shown in FIG. 5, and shows a flow of the water in the body portion 22 when the direction of the water flowing around the fine dust capturing device 21 is the reverse direction. In FIG. 7B, when the water flows in the reverse direction around the fine dust capturing device 21, the water flows into the water discharge chamber 38 from the outlet 39. The water flowing into the water discharge chamber 38 from the outlet 39 is divided into water flowing into the first passage 31 from the opening 31A on the rear end side of the first passage 31 and flowing through the first passage 31 toward the front end side thereof, and water flowing into the second passage 32 from the opening 32A on the rear end side of the second passage 32 and flowing through the second passage 32 toward the front end side thereof. At this time, the outlet 39 is disposed at a position that does not face the opening 31A on the rear end side of the first passage 31 opening in the water discharge chamber 38, but faces the opening 32A on the rear end side of the second passage 32 opening in the water discharge chamber 38. Thus, while a path of the flow of the water flowing into the water discharge chamber 38 from the outlet 39 and flowing into the second passage 32 is linear, a path of the flow of the water flowing into the water discharge chamber 38 from the outlet 39 and flowing into the first passage 31 is bent upward. Accordingly, the water flowing into the water discharge chamber 38 from the outlet 39 flows into the second passage 32 more easily than into the first passage 31. Therefore, a flow rate of the water flowing into the second passage 32 after flowing into the water discharge chamber 38 from the outlet 39 is larger than a flow rate of the water flowing into the first passage 31 after flowing into the water discharge chamber 38 from the outlet 39. As a result, a flow rate of the water flowing through the second passage 32 from the rear end side toward the front end side thereof becomes larger than a flow rate of the water flowing through the first passage 31 from the rear end side toward the front end side thereof.

Further, the rear end of the partition portion 33 is located rearward of the upper end of the inner surface of the rear wall portion 27. Since the rear end of the partition portion 33 is close to the inner surface of the rear wall portion 27 in this way, most of the water flowing into the water discharge chamber 38 from the outlet 39 hits the lower surface of a portion on the rear end side of the partition portion 33 and does not reach the opening 31A on the rear end side of the first passage 31. As a result, the flow rate of the water flowing into the first passage 31 after flowing into the water discharge chamber 38 from the outlet 39 is reduced.

Further, the upper end of the outlet 39 is located below the upper end of the opening 32A on the rear end side of the second passage 32. As a result, compared with a case where a position of the upper end of the outlet 39 is equal to a position of the upper end of the opening 32A on the rear end side of the second passage 32 in the upper-lower direction, the opening 31A on the rear end side of the first passage 31 and the outlet 39 are largely separated in the upper-lower direction. Accordingly, the water flowing into the water discharge chamber 38 from the outlet 39 is less likely to flow into the first passage 31, and the flow rate of the water flowing into the first passage 31 after flowing into the water discharge chamber 38 from the outlet 39 is further reduced.

The water that has flowed through the first passage 31 from the water discharge chamber 38 to the front end portion of the first passage 31 flows out of the body portion 22 from the water intake 26. When the water flows through the first passage 31 from the water discharge chamber 38 to the front end portion of the first passage 31, the water passes through the filter 40 in the reverse direction. However, the flow rate of water passing through the filter 40 in the reverse direction is reduced as the flow rate of water flowing through the first passage 31 from the water discharge chamber 38 to the front end portion of the first passage 31 is reduced. Accordingly, the fine dust accumulated in the filter is prevented from diffusing away from the filter.

On the other hand, the water that has flowed through the second passage 32 from the water discharge chamber 38 to the front end portion of the second passage 32 is controlled by the backflow control surface 35 formed on the rear surface of the protruding wall portion 34, flows into the first passage 31 through the gap 37, and advances through the first passage 31 from the front end portion to the rear end side thereof. That is, the backflow control surface 35 is curved so as to protrude forward, and the upper end side portion of the backflow control surface 35 extends upward and rearward. When the water flowing forward through the second passage 32 hits the backflow control surface 35, the flow direction of the water changes from the front side to the upper rear side. Then, the water flows into the front end portion of the first passage 31 through the gap 37 and flows to the rear end side of the first passage 31 (see an arrow D in FIG. 7B). When the water passes through the filter 40 in the forward direction, the fine dust contained in the water is captured by the filter 40. As described above, the fine dust contained in the water is captured by the filter 40 not only when the water flows around the fine dust capturing device 21 in the forward direction but also when the water flows around the fine dust capturing device 21 in the reverse direction.

As described above, the fine dust capturing device 21 according to the first embodiment of the present invention includes the body portion 22 extending in the front-rear direction, the water intake 26 provided on the front end side of the body portion 22, the rear wall portion 27 closing the rear end side of the body portion 22, the first passage 31 extending in the front-rear direction in the upper portion in the body portion 22 and the second passage 32 extending in the front-rear direction in the lower portion in the body portion 22, the water discharge chamber 38 provided between the rear wall portion 27 and the rear end portion of each of the first passage 31 and the second passage 32 inside the body portion 22, the outlet 39 provided in the rear wall portion 27 and communicating with the water discharge chamber 38, and the filter 40 provided in the middle of the first passage 31 and capturing the fine dust. The front end side of the first passage 31 is connected to the water intake port 26, the front end side of the second passage 32 is connected to the water intake port 26 via the gap 37 and the front end portion of the first passage 31, the rear end side of each of the first passage 31 and the second passage 32 opens in the water discharge chamber 38, and the outlet 39 is disposed in the rear wall portion 27 at the position that does not face the opening 31A on the rear end side of the first passage 31 opening in the water discharge chamber 38, but faces the opening 32A on the rear end side of the second passage 32 opening in the water discharge chamber 38. With this configuration, when the water flows in the reverse direction around the fine dust capturing device 21 during rearward movement of the ship or at the time of sudden stop of the ship, the flow rate of the water flowing into the body portion 22 from the outlet 39 and flowing in the reverse direction in the first passage 31 can be reduced, and thus the flow rate of water passing through the filter 40 in the reverse direction can be reduced. Accordingly, the fine dust accumulated in the filter 40 can be prevented from diffusing away from the filter 40.

Further, since the first passage 31 and the second passage 32 extending in parallel to each other in the front-rear direction are provided inside the body portion 22, the body portion 22 can be formed in a compact manner, and the fine dust capturing device 21 can be downsized.

The outlet 39 is disposed in the lower portion of the rear wall portion 27, and the inner surface of the rear wall portion 27 facing the water discharge chamber 38 is inclined such that the lower end portion thereof is located rearward of the upper end thereof. With this configuration, the water flowing into the water discharge chamber 38 from the first passage 31 can smoothly flow toward the outlet 39. That is, since the first passage 31 extends in the front-rear direction in the upper portion of the body portion 22, the rear end side of the first passage 31 opens in the upper portion of the water discharge chamber 38. On the other hand, the outlet 39 is disposed in the rear wall portion 27 at a position not facing the opening 31A on the rear end side of the first passage 31, specifically, in the lower portion of the rear wall portion 27. As a result, the position of the opening 31A on the rear end side of the first passage 31 and the position of the outlet 39 are deviated in the upper-lower direction. In this case, there is a concern that the smoothness of the flow of the water from the opening 31A on the rear end side of the first passage 31 toward the outlet 39 may be reduced in the water discharge chamber 38. In the present embodiment, the inner surface of the rear wall portion 27 is inclined such that the lower end thereof is located rearward of the upper end thereof. Accordingly, the water flowing into the water discharge chamber 38 from the opening 31A on the rear end side of the first passage 31 smoothly flows toward the outlet 39 along the inclined inner surface of the rear wall portion 27.

Further, the body portion 22 is formed in the tubular shape, and the partition portion 33 that partitions the space in the body portion 22 into the upper portion and the lower portion to form the first passage 31 and the second passage 32 is provided inside the body portion 22. With this configuration, since the first passage 31 and the second passage 32 which are extremely close to each other can be formed in the body portion 22, the body portion 22 can be formed in the compact manner, and the fine dust capturing device 21 can be downsized.

The rear end of the partition portion 33 faces the inside of the water discharge chamber 38 and is located rearward of the upper end of the inner surface of the rear wall portion 27. With this configuration, the distance between the rear end of the partition portion 33 and the inner surface of the rear wall portion 27 can be appropriately reduced, and the backflow water flowing into the water discharge chamber 38 from the outlet 39 can be prevented from flowing into the first passage 31 from the opening 31A on the rear end side of the first passage 31.

Further, the upper end of the outlet 39 is located below the upper end of the opening 32A on the rear end side of the second passage 32 that opens in the water discharge chamber 38. With this configuration, compared with the case where the position of the upper end of the outlet 39 is equal to the position of the upper end of the opening 32A on the rear end side of the second passage 32 in the upper-lower direction, the outlet 39 can be largely separated from the opening 31A on the rear end side of the first passage 31 in the upper-lower direction. Accordingly, the flow rate of the backflow water flowing into the first passage 31 after flowing into the water discharge chamber 38 from the outlet 39 can be reduced. According to this configuration, since the first passage 31 and the second passage 32 are extremely close to each other in the upper-lower direction, even when the opening 31A on the rear end side of the first passage 31 and the opening 32A on the rear end side of the second passage 32 are extremely close to each other in the upper-lower direction, the distance between the outlet 39 and the opening 31A on the rear end side of the first passage 31 can be increased.

Further, the protruding wall portion 34 that does not block the front side of the first passage 31 but protrudes upward so as to block the front side of the second passage 32 is provided at the lower portion of the front end portion of the body portion 22. The backflow control surface 35 that controls the flow direction of the backflow water flowing through the second passage 32 from the water discharge chamber 38 to the front end portion of the second passage 32 is formed on the rear surface of the protruding wall portion 34 such that the backflow water then flows into the first passage 31 and advances through the first passage 31 from the front end portion to the rear end side thereof. With this configuration, the backflow water that has flowed into the water discharge chamber 38 from the outlet 39 and flowed through the second passage 32 can flow into the first passage 31 and pass through the filter 40 in the forward direction. Accordingly, the fine dust contained in the water can be captured by the filter 40 not only when the water flows around the fine dust capturing device 21 in the forward direction but also when the water flows around the fine dust capturing device 21 in the reverse direction.

Further, when the fine dust capturing device 21 is viewed from the left or the right, the backflow control surface 35 is curved so as to protrude forward, and the upper end side portion of the backflow control surface 35 extends upward and rearward. With this configuration, it is possible to control the flow direction of the backflow water flowing through the second passage 32 from the water discharge chamber 38 to the front end portion of the second passage 32 such that the backflow water then flows into the first passage 31 and advances through the first passage 31 from the front end portion to the rear end side thereof, and the control can be implemented with a simple configuration.

Further, the inflow control surface 36 that controls the flow direction of the water is formed on the front surface of the protruding wall portion 34 such that the water flowing from the front side thereof toward the fine dust capturing device 21 flows into the first passage 31 and advances rearward through the first passage 31. With this configuration, the flow rate of water flowing from the water intake 26 into the second passage 32 via the front end portion of the first passage 31 and the gap 37 can be reduced.

Further, when the fine dust capturing device 21 is viewed from the left or the right, the inflow control surface 36 is inclined such that the upper end thereof is located rearward of the lower end portion thereof. With this configuration, it is possible to control the flow direction of the water flowing from the front to the fine dust capturing device 21 such that the water flows into the first passage 31 and advances rearward through the first passage 31, and the control can be implemented with a simple configuration.

### Embodiment 2

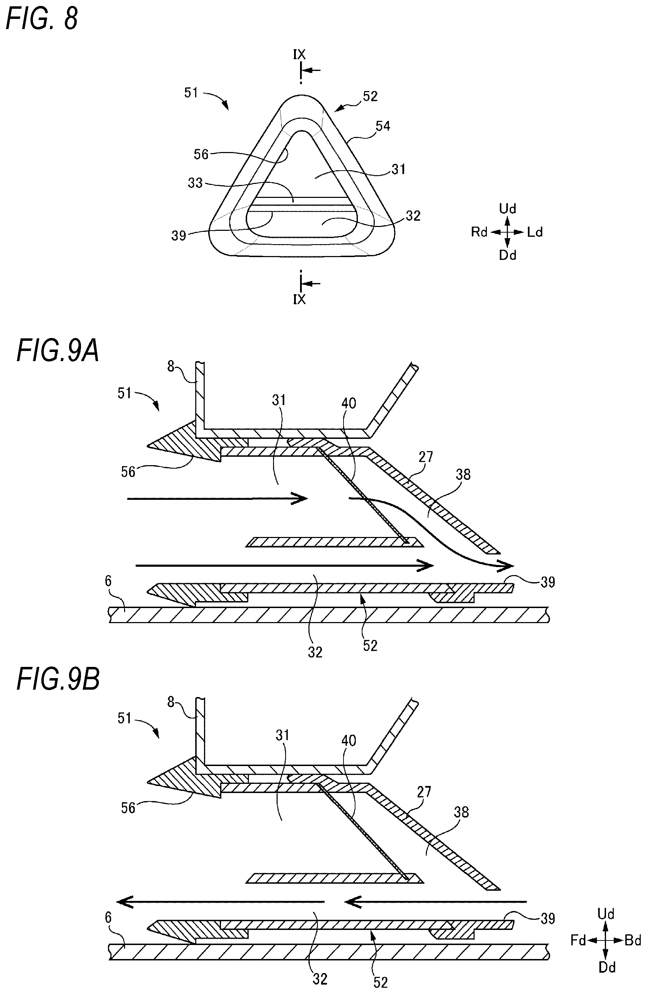

A fine dust capturing device according to a second embodiment of the present invention will be described with reference to FIGS. 8 to 9B. In the first embodiment, when describing directions of upper (Ud), lower (Dd), front (Fd), rear (Bd), left (Ld), and right (Rd), arrows drawn at the lower left or the lower right of each figure are followed. In the fine dust capturing device of the second embodiment of the present invention, the same components as those of the fine dust capturing device of the first embodiment of the present invention are denoted by the same reference numerals, and the description thereof is omitted.

The fine dust capturing device according to the second embodiment of the present invention differs from the fine dust capturing device according to the first embodiment of the present invention in that a protruding wall portion that blocks a front side of a second passage is not provided.

FIG. 8 is a front view of a fine dust capturing device 51 according to the second embodiment of the present invention. FIGS. 9A and 9B are end views showing a state in which a cross section of the fine dust capturing device 51 cut along a cutting line IX-IX in FIG. 8 is viewed from the left (right in FIG. 8). FIG. 9A shows a flow of water in a body portion 52 when a direction of the water flowing around the fine dust capturing device 51 is a forward direction. FIG. 9B shows a flow of the water in the body portion 52 when the direction of the water flowing around the fine dust capturing device 51 is a reverse direction.

As shown in FIG. 8 and FIG. 9A, in the body portion 52 of the fine dust capturing device 51, the water intake forming portion 54 is not provided with the protruding wall portion. A center of the water intake 56 coincides with a center of the water intake forming portion 54. An area of the water intake 56 is larger than an area of the water intake 26 in the first embodiment, and the water intake 56 faces both an opening on a front end side of the first passage 31 and an opening on a front end side of the second passage 32. The front end side of the second passage 32 is directly connected to the water intake 56 similarly to the front end side of the first passage 31, and opens forward via the water intake 56 similarly to the front end side of the first passage 31.

In FIG. 9A, when the water flows in the forward direction around the fine dust capturing device 51, the water flowing into the body portion 52 from the water intake 56 is divided into water flowing through the first passage 31 toward a rear end side thereof and water flowing through the second passage 32 toward a rear end side thereof. The water flowing through the first passage 31 toward the rear end side thereof passes through the filter 40, flows into the water discharge chamber 38, and flows out of the body portion 52 from the outlet 39. Further, the water flowing through the second passage 32 toward the rear end side thereof flows into the water discharge chamber 38 and flows out of the body portion 52 through the outlet 39.

In FIG. 9B, when the water flows in the reverse direction around the fine dust capturing device 21, the water flows into the water discharge chamber 38 from the outlet 39. The water flowing into the water discharge chamber 38 from the outlet 39 is divided into water flowing into the first passage 31 from the opening on the rear end side of the first passage 31 and flowing through the first passage 31 toward the front end side thereof, and water flowing into the second passage 32 from the opening on the rear end side of the second passage 32 and flowing through the second passage 32 toward the front end side thereof. The opening on the rear end side of the first passage 31, the opening on the rear end side of the second passage 32, the outlet 39, the position of the rear end of the partition portion 33, and the position of the upper end of the outlet 39 are not different between the fine dust capturing device 51 of the second embodiment and the fine dust capturing device 21 of the first embodiment. Therefore, a flow rate of the water flowing into the second passage 32 after flowing into the water discharge chamber 38 from the outlet 39 is larger than a flow rate of the water flowing into the first passage 31 after flowing into the water discharge chamber 38 from the outlet 39. As a result, a flow rate of water flowing through the second passage 32 from the rear end side toward the front end side thereof becomes larger than a flow rate of water flowing through the first passage 31 from the rear end side toward the front end side thereof. Further, in the fine dust capturing device 51 of the second embodiment, since the protruding wall portion that blocks the front side of the second passage 32 is not provided, water flows more easily in the second passage 32 provided in the fine dust capturing device 51 of the second embodiment than in the second passage 32 provided in the fine dust capturing device 21 of the first embodiment in which the front side is blocked by the protruding wall portion 34. Therefore, the flow rate of the water flowing through the second passage 32 from the rear end side toward the front end side thereof is increased as compared with the case of the first embodiment. The water that has flowed through the second passage 32 from the water discharge chamber 38 to the front end portion of the second passage 32 flows out of the body portion 52 from the water intake 56.

Further, the water that has flowed through the first passage 31 from the water discharge chamber 38 to the front end portion of the first passage 31 flows out of the body portion 52 from the water intake 56. When the water flows through the first passage 31 from the water discharge chamber 38 to the front end portion of the first passage 31, the water passes through the filter 40 in the reverse direction, but the flow rate of the water passing through the filter 40 in the reverse direction is reduced as the flow rate of water flowing through the first passage 31 from the water discharge chamber 38 to the front end portion of the first passage 31 is reduced. Accordingly, the fine dust accumulated in the filter 40 is prevented from diffusing away from the filter 40.

According to the fine dust capturing device 51 of the second embodiment of the present invention having such a configuration, when the water flows in the reverse direction around the fine dust capturing device 51 during rearward movement of the ship or at the time of sudden stop of the ship, the flow rate of the water flowing into the body portion 22 from the outlet 39 and flowing in the reverse direction in the first passage 31 can be reduced, and thus the flow rate of the water passing through the filter 40 in the reverse direction can be reduced. Accordingly, the fine dust accumulated in the filter 40 can be prevented from diffusing away from the filter 40.

In each of the above embodiments, the body portion 22 (52) has the triangular tubular shape, but the shape of the body portion 22 (52) is not limited thereto, and may be, for example, a cylindrical shape or a polygonal tubular shape in which the number of sides of the cross section is four or more.

In each of the above embodiments, the fine dust capturing device 21 (51) is disposed in the outboard motor 1 in a direction in which the first passage 31 is on the upper side and the second passage 32 is on the lower side. The entire orientation of the fine dust capturing device 21 may be changed, and the fine dust capturing device 21 (51) may be disposed in the outboard motor 1 in an orientation in which the first passage 31 is on the lower side and the second passage 32 is on the upper side, or may be disposed in an orientation in which the first passage 31 is on the left (or right) and the second passage 32 is on the right (or left).

In the first embodiment, the gap 37 is formed between the upper end of the protruding wall portion 34 and the front end of the partition portion 33 by locating the front end of the partition portion 33 rearward of the front ends of the first passage 31 and the second passage 32, but the present invention is not limited thereto. The gap 37 may be formed between the upper end of the protruding wall portion 34 and the front end of the partition portion 33 by disposing the front end of the partition portion 33 at the same position as the front ends of the first passage 31 and the second passage 32 in the front-rear direction and disposing the entire protruding wall portion 34 or the upper end of the protruding wall portion 34 in front of the front ends of the first passage 31 and the second passage 32.

Further, the fine dust capturing device of the present invention can also be applied to a ship propulsion device other than the outboard motor.

The present invention can be appropriately changed without departing from the scope of the invention which is defined by the appended claims, and a fine dust capturing device with such a change is also included in the technical concept of the present invention.

### REFERENCE SIGNS LIST

1 outboard motor (ship propulsion device)
21, 51 fine dust capturing device
22, 52 body portion
26, 56 water intake
27 rear wall portion (wall portion)
31 first passage
31A opening
32 second passage
32A opening
33 partition portion
34 protruding wall
35 backflow control surface
36 inflow control surface
38 water discharge chamber
39 outlet
40 filter

## Claims

1. A fine dust capturing device (21, 51) provided in a ship propulsion device (1), is disposed in water, and configured to capture fine dust contained in the water, the fine dust capturing device comprising:
a body portion (22, 52) extending in one direction;
a water intake (26, 56) provided on one end side of the body portion;
a wall portion (27) configured to close another end side of the body portion;
a first passage (31) and a second passage (32) extending in parallel to each other in the one direction inside the body portion;
a water discharge chamber (38) provided between the wall portion and another end portion of each of the first passage and the second passage inside the body portion;
an outlet (39) provided in the wall portion and communicating with the water discharge chamber; and
a filter (40) provided in the middle of the first passage and configured to capture the fine dust, wherein
one end side of each of the first passage and the second passage is connected to the water intake,
another end side of each of the first passage and the second passage opens in the water discharge chamber, and
the outlet is disposed in the wall portion at a position that does not face an opening of the first passage opening in the water discharge chamber, but faces an opening of the second passage opening in the water discharge chamber.

2. The fine dust capturing device according to claim 1, wherein
when an extension direction of the body portion is defined as a front-rear direction and a direction orthogonal to the extension direction of the body portion is defined as an upper-lower direction, the first passage extends in the front-rear direction in an upper portion of the body portion, the second passage extends in the front-rear direction in a lower portion of the body portion, the outlet is disposed in a lower portion of the wall portion, and an inner surface of the wall portion facing the water discharge chamber is inclined such that a lower end thereof is located rearward of an upper end thereof.

3. The fine dust capturing device according to claim 2, wherein
the body portion is formed in a tubular shape, a partition portion that partitions a space in the body portion into an upper portion and a lower portion to form the first passage and the second passage is provided inside the body portion, and a rear end of the partition portion faces the inside of the water discharge chamber and is located rearward of an upper end of the inner surface of the wall portion.

4. The fine dust capturing device according to claim 1, wherein
when an extension direction of the body portion is defined as a front-rear direction and a direction orthogonal to the extension direction of the body portion is defined as an upper-lower direction, the first passage extends in the front-rear direction in an upper portion of the body portion, the second passage extends in the front-rear direction in a lower portion of the body portion, and an upper end of the outlet is located below an upper end of an opening of the second passage opening in the water discharge chamber.

5. The fine dust capturing device according to claim 1, wherein
when an extension direction of the body portion is defined as a front-rear direction and a direction orthogonal to the extension direction of the body portion is defined as an upper-lower direction, the first passage extends in the front-rear direction in an upper portion of the body portion, the second passage extends in the front-rear direction in a lower portion of the body portion, a protruding wall portion protruding upward so as not to block a front side of the first passage but to block a front side of the second passage is provided in a lower portion of a front end portion of the body portion, and a backflow control surface that controls a flow direction of backflow water flowing through the second passage from the water discharge chamber to the front end portion of the second passage is formed on a rear surface of the protruding wall portion such that the backflow water then flows into the first passage and advances through the first passage from a front end portion to a rear end side thereof.

6. The fine dust capturing device according to claim 5, wherein
when the fine dust capturing device is viewed from left or right, the backflow control surface is curved so as to protrude forward, and an upper end side portion of the backflow control surface extends upward and rearward.

7. The fine dust capturing device according to claim 1, wherein
when an extension direction of the body portion is defined as a front-rear direction and a direction orthogonal to the extension direction of the body portion is defined as an upper-lower direction, the first passage extends in the front-rear direction in an upper portion of the body portion, the second passage extends in the front-rear direction in a lower portion of the body portion, a protruding wall portion protruding upward so as not to block a front side of the first passage but to block a front side of the second passage is provided in a lower portion of a front end portion of the body portion, and an inflow control surface that controls a flow direction of water flowing toward the fine dust capturing device from a front side thereof is formed on a front surface of the protruding wall portion such that the water flows into the first passage and advances rearward through the first passage.

8. The fine dust capturing device according to claim 7, wherein
when the fine dust capturing device is viewed from left or the right, the inflow control surface is inclined such that an upper end thereof is located rearward of a lower end portion thereof.

## Patentansprüche

1. Feinstaubabscheidungsvorrichtung (21, 51), die in einer Schiffsantriebsvorrichtung (1) vorgesehen ist, im Wasser angeordnet ist und dazu eingerichtet ist, im Wasser enthaltenen Feinstaub aufzufangen, wobei die Feinstaubabscheidungsvorrichtung Folgendes umfasst:
einen Gehäuseabschnitt (22, 52), der sich in eine Richtung erstreckt;
eine Wasserzufuhröffnung (26, 56), die an einer Endseite des Gehäuseabschnitts vorgesehen ist;
einen Wandabschnitt (27), der dazu ausgebildet ist, die andere Endseite des Gehäuseabschnitts zu verschließen;
einen ersten Durchgang (31) und einen zweiten Durchgang (32), die sich innerhalb des Gehäuseabschnitts parallel zueinander in der einen Richtung erstrecken;
eine Wasseraustrittskammer (38), die zwischen dem Wandabschnitt und dem anderen Endabschnitt jeweils des ersten Durchgangs und des zweiten Durchgangs innerhalb des Gehäuseabschnitts vorgesehen ist;
eine im Wandabschnitt vorgesehene Auslassöffnung (39), die mit der Wasseraustrittskammer in Verbindung steht; und
einen im mittleren Bereich des ersten Durchgangs vorgesehenen Filter (40), der dazu ausgebildet ist, den Feinstaub aufzufangen, wobei
eine Endseite jeweils des ersten Durchgangs und des zweiten Durchgangs mit der Wasserzufuhröffnung verbunden ist,
die andere Endseite jeweils des ersten Durchgangs und des zweiten Durchgangs in der Wasseraustrittskammer mündet und
die Auslassöffnung im Wandabschnitt an einer Position angeordnet ist, die nicht einer in die Wasseraustrittskammer mündenden Öffnung des ersten Durchgangs gegenüberliegt, jedoch einer in die Wasseraustrittskammer mündenden Öffnung des zweiten Durchgangs gegenüberliegt.

2. Feinstaubabscheidungsvorrichtung nach Anspruch 1, wobei,
wenn eine Erstreckungsrichtung des Gehäuseabschnitts als Vorder-/Rückwärtsrichtung und eine zu dieser Erstreckungsrichtung orthogonale Richtung als Oben-/Unten-Richtung definiert ist, der erste Durchgang sich in der Vorder-/Rückwärtsrichtung in einem oberen Bereich des Gehäuseabschnitts erstreckt, der zweite Durchgang sich in der Vorder-/Rückwärtsrichtung in einem unteren Bereich des Gehäuseabschnitts erstreckt, die Auslassöffnung in einem unteren Bereich des Wandabschnitts angeordnet ist und eine der Wasseraustrittskammer zugewandte Innenfläche des Wandabschnitts so geneigt ist, dass ihr unteres Ende hinter ihrem oberen Ende liegt.

3. Feinstaubabscheidungsvorrichtung nach Anspruch 2, wobei
der Gehäuseabschnitt rohrförmig ausgebildet ist, ein Trennabschnitt, der einen Raum im Gehäuseabschnitt in einen oberen und einen unteren Bereich unterteilt, um den ersten und den zweiten Durchgang zu bilden, im Inneren des Gehäuseabschnitts vorgesehen ist, und ein hinteres Ende des Trennabschnitts dem Inneren der Wasseraustrittskammer zugewandt ist und hinter einem oberen Ende der Innenfläche des Wandabschnitts liegt.

4. Feinstaubabscheidungsvorrichtung nach Anspruch 1, wobei,
wenn eine Erstreckungsrichtung des Gehäuseabschnitts als Vorder-/Rückwärtsrichtung und eine dazu orthogonale Richtung als Oben-/Unten-Richtung definiert ist, der erste Durchgang sich in der Vorder-/Rückwärtsrichtung in einem oberen Bereich des Gehäuseabschnitts erstreckt, der zweite Durchgang sich in der Vorder-/Rückwärtsrichtung in einem unteren Bereich des Gehäuseabschnitts erstreckt, und ein oberes Ende der Auslassöffnung unterhalb eines oberen Endes einer in die Wasseraustrittskammer mündenden Öffnung des zweiten Durchgangs angeordnet ist.

5. Feinstaubabscheidungsvorrichtung nach Anspruch 1, wobei
wenn eine Erstreckungsrichtung des Gehäuseabschnitts als Vorder-/Rückwärtsrichtung und eine orthogonale Richtung als Oben-/Unten-Richtung definiert ist, der erste Durchgang sich in der Vorder-/Rückwärtsrichtung in einem oberen Bereich des Gehäuseabschnitts erstreckt, der zweite Durchgang sich in der Vorder-/Rückwärtsrichtung in einem unteren Bereich des Gehäuseabschnitts erstreckt, ein vorspringender Wandabschnitt, der nach oben vorspringt, sodass er eine Vorderseite des ersten Durchgangs nicht, jedoch eine Vorderseite des zweiten Durchgangs blockiert, in einem unteren Bereich eines vorderen Endabschnitts des Gehäuseabschnitts vorgesehen ist, und eine Rückströmregulierfläche, die eine Strömungsrichtung von Rückströmwasser, das durch den zweiten Durchgang aus der Wasseraustrittskammer zum vorderen Endabschnitt des zweiten Durchgangs fließt, reguliert, auf einer Rückseite des vorstehenden Wandabschnitts ausgebildet ist, sodass das Rückströmwasser anschließend in den ersten Durchgang einströmt und durch den ersten Durchgang von einem vorderen Endabschnitt zu einer hinteren Endseite dessen weitergeleitet wird.

6. Feinstaubabscheidungsvorrichtung nach Anspruch 5, wobei,
wenn die Feinstaubabscheidungsvorrichtung von links oder rechts betrachtet wird, die Rückströmregulierfläche so gekrümmt ist, dass sie nach vorne vorsteht und ein oberer Endseitenabschnitt der Rückströmregulierfläche sich nach oben und hinten erstreckt.

7. Feinstaubabscheidungsvorrichtung nach Anspruch 1, wobei
wenn eine Erstreckungsrichtung des Gehäuseabschnitts als Vorder-/Rückwärtsrichtung und eine orthogonale Richtung als Oben-/Unten-Richtung definiert ist, der erste Durchgang sich in der Vorder-/Rückwärtsrichtung in einem oberen Bereich des Gehäuseabschnitts erstreckt, der zweite Durchgang sich in der Vorder-/Rückwärtsrichtung in einem unteren Bereich des Gehäuseabschnitts erstreckt, ein vorspringender Wandabschnitt, der nach oben vorspringt, sodass er eine Vorderseite des ersten Durchgangs nicht, jedoch eine Vorderseite des zweiten Durchgangs blockiert, in einem unteren Bereich eines vorderen Endabschnitts des Gehäuseabschnitts vorgesehen ist, und eine Einströmregulierfläche, die eine Strömungsrichtung von Wasser, das zur Feinstaubabscheidungsvorrichtung von einer Vorderseite dessen hinüberströmt, reguliert, auf einer Vorderseite des vorstehenden Wandabschnitts ausgebildet ist, sodass das Wasser in den ersten Durchgang einströmt und durch den ersten Durchgang nach hinten weitergeleitet wird.

8. Feinstaubabscheidungsvorrichtung nach Anspruch 7, wobei
wenn die Feinstaubabscheidungsvorrichtung von links oder rechts betrachtet wird, die Einströmregulierfläche so geneigt ist, dass ein oberes Ende dessen hinter einem unteren Endbereich dessen liegt.

## Revendications

1. Dispositif de capture de poussière fine (21, 51) prévu dans un dispositif de propulsion de navire (1), disposé dans l'eau et configuré pour capturer la poussière fine contenue dans l'eau, le dispositif de capture de poussière fine comprenant :
une partie de corps (22, 52) se prolongeant dans une direction ;
une prise d'eau (26, 56) prévue sur un côté d'extrémité de la partie de corps ;
une partie de paroi (27) configurée pour fermer un autre côté d'extrémité de la partie de corps ;
un premier passage (31) et un second passage (32) se prolongeant parallèlement l'un à l'autre dans la une direction à l'intérieur de la partie de corps ;
une chambre de décharge d'eau (38) prévue entre la partie de paroi et une autre partie d'extrémité de chacun des premier et second passages à l'intérieur de la partie de corps ;
une sortie (39) prévue dans la partie de paroi et communiquant avec la chambre de décharge d'eau ; et
un filtre (40) prévu au milieu du premier passage et configuré pour capturer la poussière fine, dans lequel
un côté d'extrémité de chacun des premier et second passages est relié à la prise d'eau,
l'autre côté d'extrémité de chacun des premier et second passages s'ouvre dans la chambre de décharge d'eau, et
la sortie est disposée dans la partie de paroi au niveau d'une position qui ne fait pas face à une ouverture du premier passage s'ouvrant dans la chambre de décharge d'eau, mais fait face à une ouverture du second passage s'ouvrant dans la chambre de décharge d'eau.

2. Dispositif de capture de poussière fine selon la revendication 1, dans lequel
lorsqu'une direction de prolongation de la partie de corps est définie comme une direction avant-arrière et une direction orthogonale à la direction de prolongation de la partie de corps est définie comme une direction supérieure-inférieure, le premier passage se prolonge dans la direction avant-arrière dans une partie supérieure de la partie de corps, le second passage se prolonge dans la direction avant-arrière dans une partie inférieure de la partie de corps, la sortie est disposée dans une partie inférieure de la partie de paroi, et une surface intérieure de la partie de paroi faisant face à la chambre de décharge d'eau est inclinée de sorte qu'une extrémité inférieure de celle-ci soit située en arrière d'une extrémité supérieure de celle-ci.

3. Dispositif de capture de poussière fine selon la revendication 2, dans lequel
la partie de corps est formée dans une forme tubulaire, une partie de paroi qui divise un espace dans la partie de corps en une partie supérieure et une partie inférieure pour former le premier passage, et le second passage est prévu à l'intérieur de la partie de corps, et une extrémité arrière de la partie de paroi fait face à l'intérieur de la chambre de décharge d'eau et est située en arrière d'une extrémité supérieure de la surface intérieure de la partie de paroi.

4. Dispositif de capture de poussière fine selon la revendication 1, dans lequel
lorsqu'une direction de prolongation de la partie de corps est définie comme une direction avant-arrière et une direction orthogonale à la direction de prolongation de la partie de corps est définie comme une direction supérieure-inférieure, le premier passage se prolonge dans la direction avant-arrière dans une partie supérieure de la partie de corps, le second passage se prolonge dans la direction avant-arrière dans une partie inférieure de la partie de corps, et une extrémité supérieure de la sortie est située en dessous d'une extrémité supérieure d'une ouverture du second passage s'ouvrant dans la chambre de décharge d'eau.

5. Dispositif de capture de poussière fine selon la revendication 1, dans lequel
lorsqu'une direction de prolongation de la partie de corps est définie comme une direction avant-arrière et une direction orthogonale à la direction de prolongation de la partie de corps est définie comme une direction supérieure-inférieure, le premier passage se prolonge dans la direction avant-arrière dans une partie supérieure de la partie de corps, le second passage se prolonge dans la direction avant-arrière dans une partie inférieure de la partie de corps, une partie de paroi saillante faisant saillie vers le haut de manière à ne pas bloquer un côté avant du premier passage mais à bloquer un côté avant du second passage est prévue dans une partie inférieure d'une partie d'extrémité avant de la partie de corps, et une surface de contrôle de flux sortant qui contrôle une direction d'écoulement d'eau de flux sortant s'écoulant à travers le second passage depuis la chambre de décharge d'eau vers la partie d'extrémité avant du second passage est formée sur une surface arrière de la partie de paroi saillante de sorte que l'eau de flux sortant s'écoule ensuite dans le premier passage et progresse à travers le premier passage depuis une partie d'extrémité avant vers un côté d'extrémité arrière de celle-ci.

6. Dispositif de capture de poussière fine selon la revendication 5, dans lequel
lorsque le dispositif de capture de poussière fine est observé depuis la gauche ou la droite, la surface de contrôle de flux sortant est incurvée de manière à faire saillie vers l'avant, et une partie de côté d'extrémité supérieure de la surface de contrôle de flux sortant se prolonge vers le haut et vers l'arrière.

7. Dispositif de capture de poussière fine selon la revendication 1, dans lequel
lorsqu'une direction de prolongation de la partie de corps est définie comme une direction avant-arrière et une direction orthogonale à la direction de prolongation de la partie de corps est définie comme une direction supérieure-inférieure, le premier passage se prolonge dans la direction avant-arrière dans une partie supérieure de la partie de corps, le second passage se prolonge dans la direction avant-arrière dans une partie inférieure de la partie de corps, une partie de paroi saillante faisant saillie vers le haut de manière à ne pas bloquer un côté avant du premier passage mais à bloquer un côté avant du second passage est prévue dans une partie inférieure d'une partie d'extrémité avant de la partie de corps, et une surface de contrôle de flux entrant qui contrôle une direction d'écoulement d'eau s'écoulant vers le dispositif de capture de poussière fine depuis un côté avant de celle-ci est formée sur une surface avant de la partie de paroi saillante de sorte que l'eau s'écoule dans le premier passage et progresse vers l'arrière à travers le premier passage.

8. Dispositif de capture de poussière fine selon la revendication 7, dans lequel
lorsque le dispositif de capture de poussière fine est observé depuis la gauche ou la droite, la surface de contrôle de flux entrant est inclinée de sorte qu'une extrémité supérieure de celle-ci soit située en arrière d'une partie d'extrémité inférieure de celle-ci.
